# EUROPEAN PATENT SPECIFICATION

(11) **EP 0 651 189 B1**
(45) Date of publication and mention of the grant of the patent: **25.02.1998**
(21) Application number: 94307785.9
(22) Date of filing: 24.10.1994
(51) Int. Cl.: F16K 11/22, H01L 21/02, F16K 11/20, H01L 21/00, F16K 51/02

(54) **Fluid flow control valve**
Durchfluss-Steuerventil
Soupape de commande d'écoulement

(30) Priority: 27.10.1993 JP 268690/93
(43) Date of publication of application: 03.05.1995
(73) Proprietor: Kiyohara, Masako, Kumamoto-shi Kumamoto-ken (JP)
(72) Inventor: Nishimura, Ryutaro, Nishi-ku, Osaka (JP)
(74) Representative: Daley, Michael John

(56) References cited:
- DE-A- 2 408 208
- FR-A- 783 370
- FR-A- 2 043 936
- US-A- 3 206 159
- US-A- 5 145 152
- US-A- 5 273 075

## Description

This invention relates to a valve assembly for handling high purity gas used mainly in semiconductor manufacturing apparatus and the like. More particularly, it sets out to provide a valve, usually block-shaped, which is connected to the outlet side of other valves incorporated in the pipings so as to discharge promptly and smoothly the residual gas in the pipings in which the valves are incorporated. A fluid flow control valve assembly comprising a gas feed passage possessing an inlet and an outlet, and which is suitable for a semiconductor manufacturing apparatus, is disclosed in US-A-5145152.

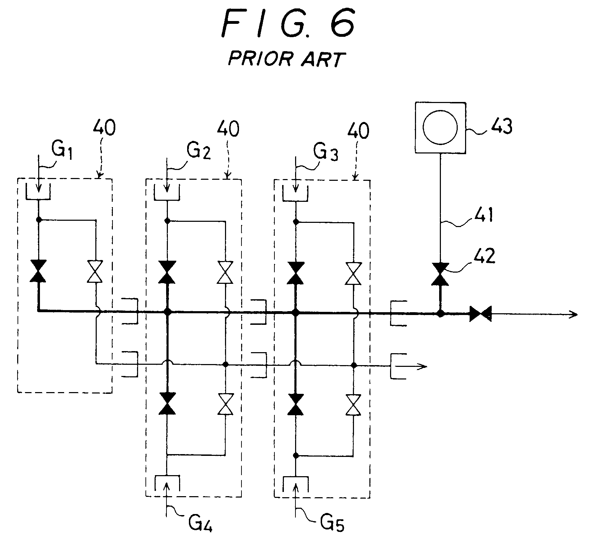

Generally, the pipings for feeding gas to a process chamber for forming a film on a wafer, which is an essential part in a semiconductor manufacturing apparatus, is constituted as shown in Figure 6, in which a plurality of block-shaped valves 40 in a structure of integrally combining plural valves are incorporated into gas feed pipings leading to the process chamber (not shown), and by properly controlling the valves 40, various gases G₁, G₂, G₃, G₄, G₅ are alternately supplied into the process chamber through the block 40.

In Figure 6, reference numeral 41 is a branch pipe connected to the gas feed pipings, 42 is a valve installed in the branch pipe 41, and 43 is a vacuum pump connected to the branch pipe 41.

The pipings into which the valves 40 are incorporated can be smaller in the inner volume of the pipe passage as compared with pipings into which a plurality of single valves are incorporated, and hence advantages are exhibited, for instance, the gas replacement performance is enhanced and generation of particles can be prevented.

In the process chamber used in semiconductor manufacture, it is necessary to change the type of the gas to be supplied inside, or discharge the gas from the process chamber. For this purpose, it is necessary to discharge also the residual gas in the pipings (the thick line portions in Figure 6) where the valves 40 are incorporated.

To discharge the residual gas in the pipings where the valves 40 are incorporated, in the conventional method, first the supply of gas is stopped, and then the residual gas is discharged by using the vacuum pump 43 and the branch pipe 41 connected to the gas feed pipings at the downstream side of the block valves 40.

However, if the inner volume of the pipings is relatively large, when the closing valve 42 provided at the intake side of the vacuum pump 43 is opened during continuous operation for discharging the residual gas, the degree of vacuum at the vacuum pump 43 side drops sharply. Besides to decompress the pipings, lowered in the degree of vacuum to a pressure close to the atmospheric pressure, to a desired degree of vacuum by the vacuum pump 43 only, it takes a considerably long time if a vacuum pump of a large capacity is used.

Accordingly, in the conventional system of directly decompressing the pipings by the vacuum pump 43 alone, the residual gas in the pipings cannot be discharged promptly and smoothly.

U.S. Patent 3,206,159 (Anderson) discloses a vacuum operated three-way valve assembly comprising two valves. This valve assembly is to be used in washing machines for the control of a water flow.

It is a primary object of the invention to provide a valve capable of discharging promptly and smoothly the residual gas in the piping where other valves are incorporated.

To achieve the object, the invention provides a gas feed passage possessing an inlet and an outlet, a branch passage possessing an outlet, branched off from and connected to the gas feed passage, a body having a chamber formed in the branch passage, a first valve provided in the body for opening and closing the downstream side of the gas feed passage , and a second valve provided in the body for opening and closing the upstream side of the branch passage,
characterised in that the gas feed passage between the outlet and a connection point where the branch passage is branched off is arranged to be opened and closed by the first valve, that the branch passage between a point of connection with the gas feed passage and the chamber is arranged to be opened and closed by the second valve and that the fluid flow control valve assembly further includes vacuum means for continuously maintaining a vacuum in the chamber.

When the branch passage is closed by manipulating the second valve and the gas feed passage is opened by manipulating the first valve, the gas supplied from the gas feed source flows into the process chamber side through the gas feed passage.

Moreover, by evacuating the chamber in advance by the vacuum pump, and stopping the gas feed, when the gas feed passage is closed by manipulating the first valve and the branch passage is opened by manipulating the second valve, the residual gas in the gas feed passage and branch passage, and the residual gas in the pipings are sucked out forcibly and removed by the sum of the vacuum in the tank chamber and the vacuum at the vacuum pump side. As a result, the residual gas in the conduit can be discharged promptly and securely.

The invention will now be described by way of example with reference to the drawings wherein:-

Figure 1 is a front view of a block valve with tank chamber in an embodiment of the invention.

Figure 2 is a plan view of the block valve with tank chamber.

Figure 3 is a partially cut-away front view of the block valve with tank chamber.

Figure 4 is a partially cut-away left side view of the block valve with tank chamber.

Figure 5 is a schematic block diagram of incorporating the block valve with tank chamber into gas pipings.

Figure 6 is a schematic block diagram of incorporating a plurality of block valves into gas pipings as already described.

Referring now to the drawings, an embodiment of the invention is described in detail below:

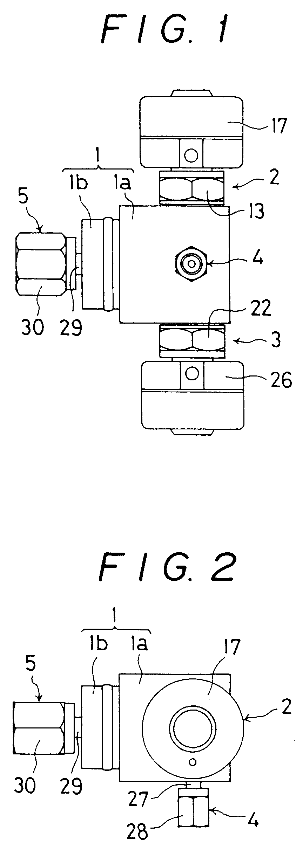

Figure 1 through Figure 4 shows a block valve with a tank/chamber according to an embodiment of the invention, and this block valve with tank/chamber comprises body 1, first valve 2, second valve 3, first joint 4, and second joint 5, among others. Direct touch type metal diaphragm valves are used as the first valve 2 and second valve 3.

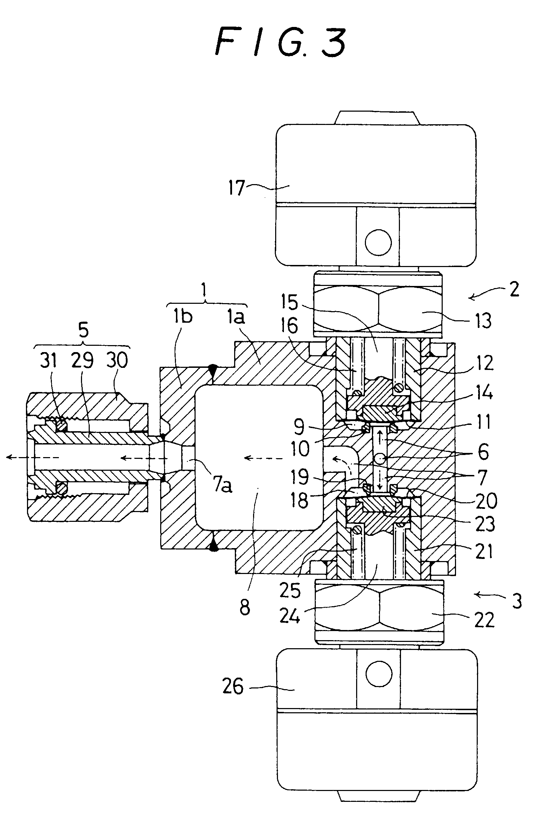

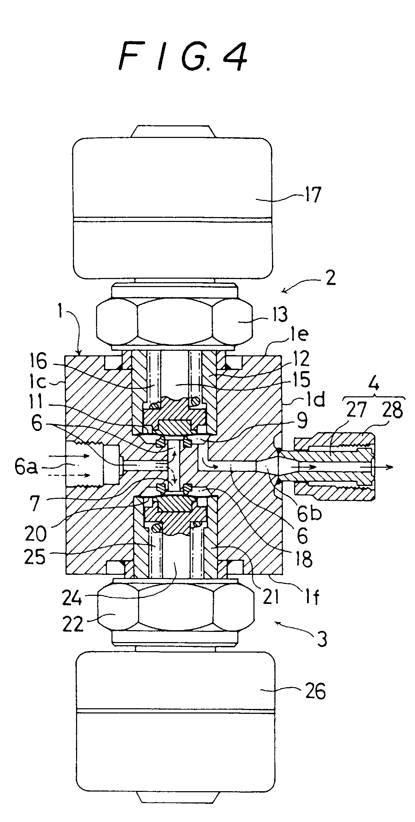

The body 1 is formed nearly in a block form, being made of stainless steel or other metal material, and consists of a main body 1a in the block form and a lid 1b in the shape of a plate welded to the left side of the main body 1a. In the body 1, as shown in Figure 3 and Figure 4, a gas feed passage 6 possessing an inlet 6a at the rear side 1c (rear side in Figure 3) of the main body 1a, and an outlet 6b at a front side 1d (front side in Figure 3) of the main body 1a, and a branch passage 7 connected to and communicating with the gas feed passage 6 and possessing an outlet 7a in the lid 1b are formed. Furthermore, in the midst of the branch passage 7, a tank/chamber 8 possessing an appropriate capacity is formed. In this embodiment, the tank/chamber 8 has a recess formed at the left side of the main body 1a and opened on one side as shown in Figure 3, and the opening of the recess is closed with the lid 1b in the anti-tight state.

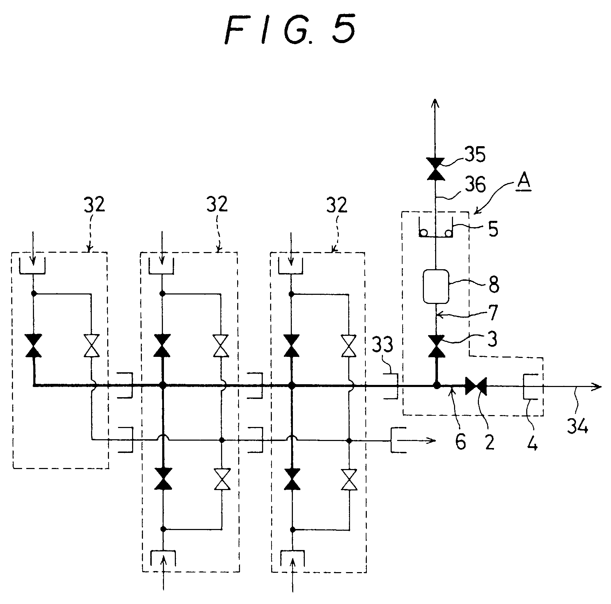

The first valve 2 is provided at the upper side le of the body 1, so as to open and close the gas feed passage 6 at the downstream side of the place where the branch passage 7 is connected (see Figure 5).

The first valve 2 is formed on the top le of the body 1, and comprises a concave first valve chamber 9 opened upward and communicating with the gas feed passage 6, a first valve seat 10 in an annular form made of synthetic resin buried in the bottom of the first valve chamber 9, a first diaphragm 11 of thin metal plate (stainless steel, Inconel, etc.) disposed in the first valve chamber 9, and abutting against and departing from the first valve seat 10 by upward and downward movement of the middle part while keeping airtight the first valve chamber 9, a first bonnet 12 of tubular form made of metal for holding and fixing air tightly the outer periphery of the first diaphrgm 11 in co-operation with the body 1, a first bonnet nut 13 being screwed to the body 1 side for pressing and fixing the first bonnet 12 to the body 1 side, a metal first stem 15 elevatably supported on the first bonnet 12 and provided at the lower end with a first diaphragm holder 14 abutting against the middle of the first diaphragm 11, a first spring 16 for thrusting the first stem 15 to the lower side to abut the first diaphragm 11 against the first valve seat 10, and a first drive unit 17 coupled to the first stem 15 and comprising a fluid actuator or the like for elevating the first stem 15 against the thrusting force of the spring 16.

When driving fluid (air, etc.) is fed into the first drive unit 17 of the valve, the first stem 15 goes up by overcoming the thrusting force of the first spring 16, and accordingly the first diaphragm 11 is pushed upward by its elastic force and fluid pressure to be departed from the first valve seat 10. When supply of driving fluid is stopped, the first stem 15 is lowered by the thrusting force of the first spring 16, and the middle of the first diaphragm 11 is pushed downward by the first stem 15 to be seated on the first valve seat 10.

The second valve 3 is provided at the bottom 1f side of the body 1, and is designed to open and close the branch passage 7 at the upstream side of the tank chamber 8 (see Figure 5). The second valve 3 is composed the same as the first valve 2.

That is, the second valve 3 is formed at the lower side 1f of the body 1, and comprises a concave second valve chamber 18 opened downward and communicating with the branch passage 7, a second valve seat 19 provided in the bottom of the second valve chamber 18, a second diaphragm 20 for keeping airtight the second valve chamber 18 and abutting against and departing from the second valve seat 19 by upward and downward movement of the middle part, a second bonnet 21 inserted into the second valve chamber 18 for pressing and fixing the outer periphery of the second diaphragm 20 air tightly in co-operation with the body 1, a second bonnet nut 22 screwed to the body 1 side for pressing and fixing the second bonnet 21 to the body 1 side, a second stem 24 elevatably supported on the second bonnet 21, and provided at the upper end with a second diaphragm holder 23 abutting against the middle of the second diaphragm 20, a second spring 25 for thrusting the second stem 24 in the direction of the second valve seat 19 for abutting the second diaphragm 20 to the valve seat, and a second drive unit 26 comprising a fluid actuator for driving the second stem 24 against the thrusting force of the second spring 25.

The first and second joints 4, 5 are provided respectively at the outlet 6b of the gas feed passage 6, and the outlet 7a of the branch passage 7, so that connection to the pipings may be facilitated.

That is, the first joint 4 consists of a first sleeve 27 welded to the outlet 6b of the gas feed passage 6 and formed of stainless steel or other metal material, and a first union nut 28 made of stainless steel and externally fitted to the first sleeve 27, and the second joint 5 consists of a second sleeve 29 welded to the outlet 7a of the branch passage 7, a second union nut 30 externally fitted to the second sleeve 29, and a bearing 31 interposed between the second sleeve 29 and second union nut 30.

The operation of the block valve with tank/chamber A is described below.

The block valve with the tank/chamber is incorporated into the pipings for feeding gas into the process chamber (not shown) in the semiconductor manufacturing apparatus as shown in Figure 5, and is disposed at the secondary side of a plurality of other block valves 32 installed in the pipings. That is, the inlet 6a of the gas feed passage 6 is connected to the outlet of the block valve 32 through a connection metal piece 33, and the first joint 4 provided at the outlet 6b of the gas feed passage 6 is connected to a gas feed pipe 34 for leading the gas into the process chamber. The second joint 5 provided at the outlet 7a of the branch passage 7 is connected to a branch pipe 36 through a valve 35. This branch pipe 36 is connected to the vacuum pump (not shown) such as rotary pump).

The inner volume of the tank/chamber 8 is larger than the inner volume of the pipings (thick line parts in Figure 5) in which the block valves 32 are incorporated. The first valve 2 and second valve 3 are normally closed.

When feeding gas into the process chamber by using the pipings in which the block valve with tank/chamber A is installed, the first valve 2 is opened while the second valve 3 is closed. That is, when the first stem 15 is elevated by the first drive unit 17, the first diaphragm 11 is pushed upward in its middle by the elastic force or fluid pressure, and is departed from the first valve seat 10. As a result, the gas feed passage 6 is opened, and the gas flowing into the inlet 6a of the gas feed passage 6 from the block valves 32 flows into the gas feed pipe 34 side, as indicated by the solid arrow mark in Figure 4, by way of a primary side passage (from the inlet 6a to the first valve chamber 9) of the gas feed passage 6, the first valve chamber 9 and the second passage (from the first valve chamber 9 to the outlet) of the gas feed passage 6, and is guided into the process chamber through the gas feed pipe 34.

When changing over the gas to be supplied to the process chamber, the gas supply must be stopped and the residual gas in the pipings (thick line portion in Figure 5) must be discharged. With the second valve 3 being closed and the valve 36 being opened the vacuum pump (not shown) is operated to keep the chamber 8 vacuum at about 10⁻⁴ Torr beforehand.

To discharge the residual gas from the pipings, the first valve 2 is closed, and the second valve 3 is opened. That is, supply of driving fluid into the first drive unit 17 is stopped, and the second stem 24 is raised by the second drive unit 26. As a result, the middle part of the first diaphragm 11 is pushed downward by the first stem 15, and is seated on the first valve seat 10, while the second diaphragm 20 is pushed by its elastic force or fluid pressure to be departed from the second valve seat 19. As a result, the gas feed passage 6 is closed, and the branch passage 7 is opened. As shown by the arrow of the broken line, (Figure 3) residual gas in the pipings flows from the inlet 6a of the gas feed passage 6 to sequentially the primary side passage of the gas feed passage 6, the primary side passage of the branch passage 7, the second valve chamber 18, and the secondary side passage of the branch passage 7, is sucked into the vacuum tank chamber 8 and is discharged from the tank/chamber 8 to the branch pipe 37 side. The vacuum pump is continuously operated automatically so that the residual gas flowing into the tank/chamber 8 may be discharged promptly.

In this way, the block valve with tank/chamber A of the invention is designed to discharge the residual gas in the pipings, where other block valves 32 are incorporated, forcibly into the tank/chamber 8 by evacuating the tank/chamber 8 formed in the body 1 and opening and closing the valves 2, 3, so that the residual gas in the piping may be discharged promptly and securely.

Moreover, the block valve with tank/chamber A comprises two valves 2, 3 in one body 1, and the tank/chamber 8 is formed in the body 1, and therefore the block valve itself is not increased in size, and wide space for installation is not needed when incorporated in the piping so that the installation space may be saved.

In the embodiment, metal diaphragm valves of direct touch type are used as the first valve and second valve, but the valves 2, 3 may be also of other type. Also in the embodiment, the drive units 17, 26 comprising the fluid pressure actuator are coupled to the end of the first stem 15 and second stem 24. But in other embodiments manual handles may be provided on the first stem 15 and second stem 24 so that the stems 15, 24 may be elevated or lowered by manual operation. In the embodiment, the first joint 4 and second joint 5 are provided at the outlet 6b of the gas feed passage 6 and outlet 7a of the branch passage 7, but the joints 4, 5 may be omitted in another embodiment. Also, in the embodiment, the valve 35 provided in the branch pipe 36 is opened, and the vacuum pump is continuously operated automatically to sequentially discharge the residual gas sucked in the tank chamber 8, but in other embodiment, after evacuating the tank chamber 8, the valve 35 provided in the branch pipe 36 is closed, and the valve 35 is opened when discharging the residual gas, and thereby residual gas may be sucked into the tank chamber 8.

As mentioned herein, the block valve with tank/chamber A of the invention has in the body the gas feed passage and the branch passage branched off from and communicating with the gas feed passage and also has the tank chamber in the midst of the branch passage. The body is further provided with the first valve for opening and closing the gas feed passage at the downstream side of the place of connection with the branch passage, and the second valve for opening and closing the branch passage at the upstream side of the tank chamber. Accordingly, by incorporating the block-shaped valve with tank chamber at the downstream side of the pipings in which other block valves are installed and by opening and closing the valves with the tank chamber being in vacuum state, the residual gas in the pipings can be discharged by force into the vacuum tank chamber. As a result, the residual gas in the pipings can be promptly and surely discharged, so that the quality of semiconductors can be improved.

The block valve with tank/chamber A of the invention has two valves in one body, and a tank/chamber is formed in the body. As a result, the size of the block valve itself is not increased and wide installation space is not required when placed in the pipings so that the installation space may be saved.

## Claims

1. A fluid flow control valve assembly comprising a gas feed passage (6) possessing an inlet (6a) and an outlet (6b), a branch passage (7) possessing an outlet (7a), branched off from and connected to the gas feed passage (6), a body (1) having a chamber (8) formed in the branch passage (7), a first valve (2) provided in the body (1) for opening and closing the downstream side of the gas feed passage (6), and a second valve (3) provided in the body (1) for opening and closing the upstream side of the branch passage (7), whereby :
the gas feed passage (6) between the outlet (6b) and a connection point where the branch passage (7) is branched off is arranged to be opened and closed by the first valve (2); the branch passage (7) between a point of connection with the gas feed passage (6) and the chamber (8) is arranged to be opened and closed by the second valve (3); and the fluid flow control valve assembly further includes vacuum means for continuously maintaining a vacuum in the chamber (8).

2. A fluid flow control valve assembly according to claim 1 wherein the chamber (8) has an internal volume which is larger than the total volume of the gas feed passage (6) upstream of the first valve (2) and the branch passage (7) upstream of the second valve (3).

3. A fluid flow control valve assembly according to claim 1 wherein the fluid flow control valve further includes valve means connected by piping to the gas feed inlet for selectively supplying a first gas or second gas to the gas feed passage (6).

4. A fluid flow control valve assembly according to Claim 1, or 2, wherein a first joint (4) is provided at the gas outlet (6b) side of the gas feed passage (6), and a second joint (5) at the outlet (7a) side of the branch passage (7).

5. A fluid flow control valve assembly according to any preceding claim wherein the first valve (2) and second valve (3) are metal diaphragm valves of direct touch type.

6. A fluid flow control valve assembly according to Claim 5, wherein the metal diaphragm valves of direct touch type are of pneumatic type, motor-driven type, or manual type.

## Patentansprüche

1. Eine Durchfluß-Steuerventil-Einrichtung mit einem Gaszuführungskanal (6) mit Einlaß (6a) und Auslaß (6b), einem Zweigkanal (7) mit einem Auslaß (7a), der mit dem Gaszuführungskanal (6) in Verbindung steht und von diesem abzweigt, einem Gehäuse (1) mit einer im Zweigkanal (7) ausgebildeten Kammer (8), mit einem im Gehäuse (1) vorgesehenen ersten Ventil (2) zum Öffnen und Schließen der strömungsabwärtigen Seite des Gaszuführungskanals (6) und mit einem im Gehäuse (1) vorgesehenen zweiten Ventil (3) zum Öffnen und Schließen der strömungsaufwärtigen Seite des Zweigkanals (7), wobei der Gaszuführungskanal (6) zwischen Auslaß (6b) und einem Anschlußpunkt, in dem der Zweigkanal (7) von dem Gaszuführungskanal (6) abzweigt, zum Öffnen und Schließen durch das erste Ventil (2) ausgebildet ist, der Zweigkanal (7) zwischen einem Punkt, in dem er mit dem Zuführungskanal (6) verbunden ist und der Kammer (8) zum öffnen und Schließen durch das zweite Ventil (3) ausgebildet ist und die Durchfluß-Steuerventil-Einrichtung ferner ein Vakuummittel zur kontinuierlichen Aufrechterhaltung eines Vakuums in der Kammer (8) einschließt.

2. Eine Durchfluß-Steuerventil-Einrichtung nach Anspruch 1, bei der das Fassungsvermögen der Kammer (8) größer als das Gesamtvolumen des Gaszuführungskanals (6) strömungsaufwärts des ersten Ventils (2) und des Zweigkanals (7) strömungsabwärts des zweiten Ventils ist.

3. Eine Durchfluß-Steuerventil-Einrichtung nach Anspruch 1, bei der das Durchfluß-Steuerventil zusätzlich ein Ventilmittel einschließt, das leitungsmäßig mit dem Einlaß des Gaszuführungskanals verbunden ist, um selektiv ein erstes oder ein zweites Gas dem Gaszuführungskanal (6) zuzuführen.

4. Eine Durchfluß-Steuerventil-Einrichtung nach Anspruch 1 oder 2, bei der ein erster Anschluß (4) am gasauslaßseitigen Ende (Auslaß 6b) des Gaszuführungskanals (6) und ein zweiter Anschluß (5) am auslaßseitigen Ende (Auslaß 7a) des Zweigkanals (7) angeordnet sind.

5. Eine Durchfluß-Steuerventil-Einrichtung nach einem beliebigen der vorstehenden Ansprüche, bei der das erste Ventil (2) und das zweite Ventil (3) Membranventile mit Metallmembranen und deren direkte Abstützung sind.

6. Eine Durchfluß-Steuerventil-Einrichtung nach Anspruch 5, bei der die Ventile mit Metallmembranen und direkter Abstützung motorisch oder manuell zu betätigende Pneumatikventile sind.

## Revendications

1. Système de régulateur de débit de fluide, comportant un passage (6) d'alimentation en gaz possédant une entrée (6a) et une sortie (6b), un passage de dérivation (7) possédant une sortie (7a), dérivée du passage (6) d'alimentation en gaz et reliée audit passage, un corps (1) ayant une chambre (8) formée dans le passage de dérivation (7), une première vanne (2) disposée dans le corps (1) pour ouvrir et fermer le côté aval du passage (6) d'alimentation en gaz, et une deuxième vanne (3) disposée dans le corps (1) pour ouvrir et fermer le côté amont du passage de dérivation (7), ce par quoi le passage (6) d'alimentation en gaz entre la sortie (6b) et un point de raccordement où est dérivé le passage de dérivation (7) est conçu pour être ouvert et fermé par la première vanne (2); le passage de dérivation (7) entre un point de raccordement avec le passage (6) d'alimentation en gaz et la chambre (8) est conçu pour être ouvert et fermé par la deuxième vanne (3); et le système de régulateur de débit de fluide comporte en outre un moyen de mise en dépression pour entretenir en permanence un vide dans la chambre (8).

2. Système de régulateur de débit de fluide selon la revendication 1, dans lequel la chambre (8) a un volume intérieur plus grand que le volume total du passage (6) d'alimentation en gaz en amont de la première vanne (2) et du passage de dérivation (7) en amont de la deuxième vanne (3).

3. Système de régulateur de débit de fluide selon la revendication 1, dans lequel le régulateur de débit de fluide comporte en outre un moyen formant vanne relié par une tuyauterie à l'entrée d'alimentation en gaz pour fournir de manière sélective un premier gaz ou un deuxième gaz au passage (6) d'alimentation en gaz.

4. Système de régulateur de débit de fluide selon la revendication 1 ou 2, dans lequel un premier raccord (4) est disposé du côté de la sortie (6b) de gaz du passage (6) d'alimentation en gaz, et un deuxième raccord (5) du côté de la sortie (7a) du passage de dérivation (7).

5. Système de régulateur de débit de fluide selon l'une quelconque des revendications précédentes, dans lequel la première vanne (2) et la deuxième vanne (3) sont des vannes à membrane métallique du type à action directe.

6. Système de régulateur de débit de fluide selon la revendication 5, dans lequel les vannes à membrane métallique du type à action directe sont du type pneumatique, du type à moteur ou du type manuel.
